# FASCICULE DE BREVET EUROPEEN

(11) **EP 4 003 834 B1**
(45) Date de publication et mention de la délivrance du brevet: **02.09.2026**
(21) Numéro de dépôt: 20746219.3
(22) Date de dépôt: 29.07.2020
(51) Int. Cl.: B64C 25/44, B60T 8/32, B60T 8/17

(54) **DISPOSITIF DE FREINAGE D'UNE ROUE**
RADBREMSVORRICHTUNG
WHEEL BRAKING DEVICE

(30) Priorité: 30.07.2019 FR 1908705
(43) Date de publication de la demande: 01.06.2022
(73) Titulaire: Safran Landing Systems, 78140 Vélizy-Villacoublay (FR)
(72) Inventeur: BRUN, Emmanuel, 77550 MOISSY-CRAMAYEL (FR); PAVOINE, Vincent, 77550 MOISSY-CRAMAYEL (FR); FRANK, David, 77550 MOISSY-CRAMAYEL (FR); LESTAGE, Jean-Baptiste, 77550 MOISSY-CRAMAYEL (FR)
(74) Mandataire: Cabinet Boettcher
(86) Numéro de dépôt international: PCT/EP2020/071450
(87) Numéro de publication internationale: WO 2021/018988

(56) Documents cités:
- EP-A1- 1 712 441
- EP-A1- 2 727 784
- US-A1- 2006 108 864
- US-A1- 2011 226 569
- US-A1- 2018 079 402
- US-B1- 6 890 041
- US-B2- 10 081 346

## Description

La présente invention concerne le domaine du freinage et, plus particulièrement, un dispositif de freinage d'une roue **d'un** véhicule. **L'invention** s'applique en particulier au freinage des roues du train d'atterrissage d'un aéronef.

### ARRIERE PLAN DE L'INVENTION

Pour ralentir, arrêter ou maintenir à l'arrêt un véhicule, il est d'usage d'exercer une pression sur une pédale de frein afin de déclencher le fonctionnement d'un système de freinage. Le système de freinage comprend généralement des freins montés sur des roues du véhicule et utilisant le principe de friction entre deux surfaces mises en contact sous l'action d'un effort de presse.

Pour un enfoncement ou une rotation, donné, de la pédale, l'effort de presse est généralement tout d'abord identique sur chacun des freins du véhicule puis est régulé indépendamment sur chaque frein pour générer un couple de freinage optimal sur chacune des roues sans blocage de celles-ci.

De tels systèmes de freinage sont fiables et efficaces mais ils présentent l'inconvénient d'offrir une grande disparité entre le couple de freinage produit et l'effort de presse appliqué sur chacune des roues, notamment entre le début et la fin d'un freinage, entre un frein neuf et un frein usé, **d'un** frein à l'autre...

Il est par ailleurs reconnu que ce type de système de freinage est bien plus efficace à basse vitesse qu'à haute vitesse alors que c'est à haute vitesse que les performances de freinage sont les plus critiques. La réponse du système de freinage à basse vitesse apparaît ainsi disproportionnée et induit des contraintes importantes nécessitant un surdimensionnement de la structure portant le frein.

Or, l'allègement des aéronefs est devenu un objectif incontournable pour tous les constructeurs aéronautiques, notamment en vue de réduire la consommation de carburant des aéronefs. Des normes environnementales exigent en effet la réduction des émissions de polluants, notamment de dioxyde de carbone (CO2).

Il est connu des dispositifs de freinage des documents FR-A-3044432 et FR-A-3044296 qui sont très efficaces. Le document EP171244A divulgue un dispositif de réglage de la vitesse d'un aéronef roulant sur le sol, ce dispositif comprenant un capteur de couple et plusieurs actionneurs.

### OBJET DE L'INVENTION

L'invention a pour objet de proposer un système de freinage simple, tout en étant robuste et fiable, qui permettrait d'obvier au moins en partie aux inconvénients précités.

### RESUME DE L'INVENTION

A cet effet, l'invention propose un dispositif de freinage d'une roue comprenant :
- un frein comportant au moins un premier actionneur et un deuxième actionneur agencés pour appliquer un couple de freinage à la roue ;
- un système de commande agencé pour commander individuellement le premier actionneur et le deuxième actionneur en fonction d'une valeur de freinage requise ;
- au moins un premier capteur de couple de freinage agencé pour fournir à l'unité de commande une première mesure du couple de freinage appliqué par le frein sur la roue.

Selon l'invention, le système de commande est agencé pour interrompre la commande du premier actionneur ou la commande du deuxième actionneur lorsque le couple de freinage mesuré par le premier capteur excède une valeur limite de couple de freinage prédéterminée.

Un tel dispositif de freinage permet, de manière simple, de se protéger d'un sur-couple de freinage dû, par exemple, à un dysfonctionnement d'un des actionneurs.

Selon un premier mode de réalisation, le système de commande comprend une unité électronique de commande agencée pour délivrer un premier signal de commande au premier actionneur et un deuxième signal de commande au deuxième actionneur. Une unité électronique de surveillance est agencée pour empêcher, lorsque le couple de freinage mesuré par le premier capteur excède la valeur limite de couple de freinage prédéterminée, la délivrance du premier signal de commande ou du deuxième signal de commande.

L'unité de surveillance est ainsi en mesure de limiter le couple de freinage réellement appliqué à la roue. Cet agencement est particulièrement intéressant car il permet de limiter l'influence d'une défaillance de l'unité de commande (due par exemple à une erreur d'un programme informatique déterminant les signaux de commande).

Selon un deuxième mode de réalisation, le système de commande comprend une première unité de commande individuelle agencée pour délivrer un premier signal de commande au premier actionneur et une deuxième unité de commande individuelle agencée pour délivrer un deuxième signal de commande au deuxième actionneur.

Un tel agencement permet au système de commande de limiter le couple de freinage appliqué par le frein sur la roue en interrompant la commande du premier actionneur ou du deuxième actionneur selon que la première unité de commande ou la deuxième unité de commande est défaillante. Chaque unité de commande individuelle peut très rapidement relâcher l'effort produit par l'actionneur qu'elle commande en cas de surcouple résultant par exemple d'une défaillance de l'autre unité de commande, ce qui limite le surcouple exercé par le dispositif de freinage dans son ensemble.

De manière particulière, le système de commande comprend une boucle d'asservissement pour commander le premier actionneur et le deuxième actionneur selon une loi de commande fonction de la valeur de freinage requise et du couple de freinage mesuré par le premier capteur.

La boucle d'asservissement peut ainsi permettre de contrôler finement le couple de freinage appliqué par le frein sur la roue et donc d'obtenir notamment une meilleure répartition de l'énergie dissipée lors d'un freinage entre différentes roues d'un véhicule pourvues d'un tel dispositif de freinage.

De manière particulière, la valeur de freinage est représentative d'une amplitude de mouvement d'un instrument de commande de freinage, comme par exemple un déplacement d'une pédale de frein.

De manière particulière, le premier actionneur et le deuxième actionneur sont électromécaniques.

En variante, le premier actionneur et le deuxième actionneur sont des vérins hydrauliques.

De manière particulière, un deuxième capteur de couple de freinage est agencé pour fournir au système de commande une deuxième mesure du couple de freinage appliqué par le frein sur la roue.

L'utilisation de deux capteurs de couple de freinage permet de fiabiliser le dispositif en doublant la mesure du couple de freinage appliqué sur la roue.

Avantageusement alors, le premier capteur de couple de freinage et le deuxième capteur de couple de freinage sont de technologies différentes.

Le risque que les deux capteurs de couple de freinage soient sensibles aux mêmes perturbations ou sujets aux mêmes types de défaillance est limité de sorte que la probabilité pour que les deux capteurs de couple de freinage soient défaillants en même temps est faible. Ceci améliore la sécurité du dispositif de freinage de l'invention.

L'invention concerne également un train d'atterrissage comprenant au moins une roue pourvue d'un tel dispositif de freinage.

L'invention concerne aussi un aéronef comprenant un tel train d'atterrissage, et plus particulièrement un aéronef de ligne.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig. 1] la figure 1 est une représentation simplifiée d'un aéronef comprenant un train d'atterrissage comportant des roues pourvues d'un dispositif de freinage selon l'invention ;
[Fig.2] la figure 2 est une représentation schématique d'un dispositif de freinage selon un premier mode de réalisation de l'invention ;
[Fig.3] la figure 3 est une représentation schématique d'un dispositif de freinage selon un deuxième mode de réalisation de l'invention.

### DESCRIPTION DETAILLEE DE L'INVENTION

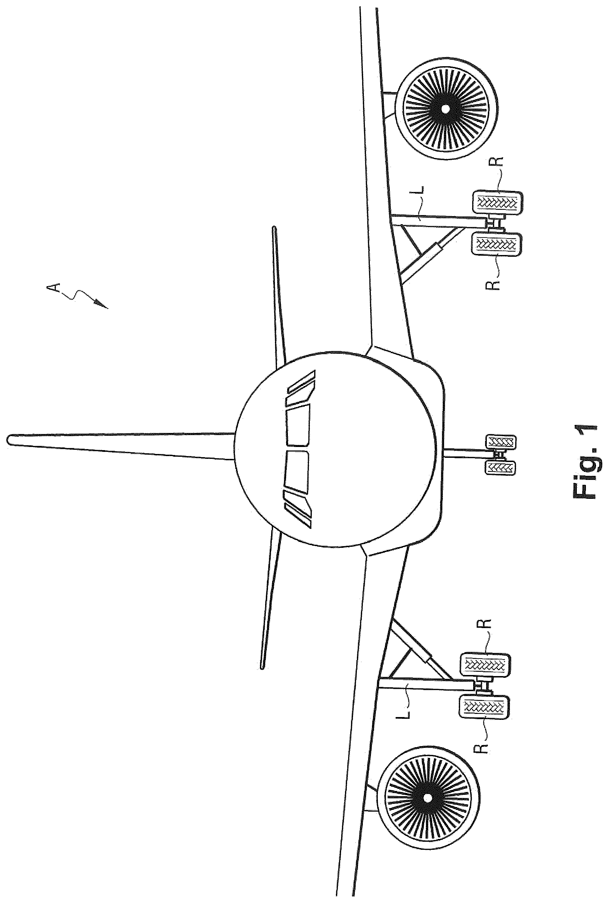

Un aéronef A comprend, comme illustré à la figure 1, deux atterrisseurs principaux L portant chacun des roues R dites « freinées », c'est-à-dire équipées d'un frein destiné à freiner l'aéronef A lorsque celui-ci est au sol. La présente description porte sur une unique roue R freinée, mais l'invention s'applique bien sûr de la même manière à tout ou partie des roues R freinées de l'aéronef A.

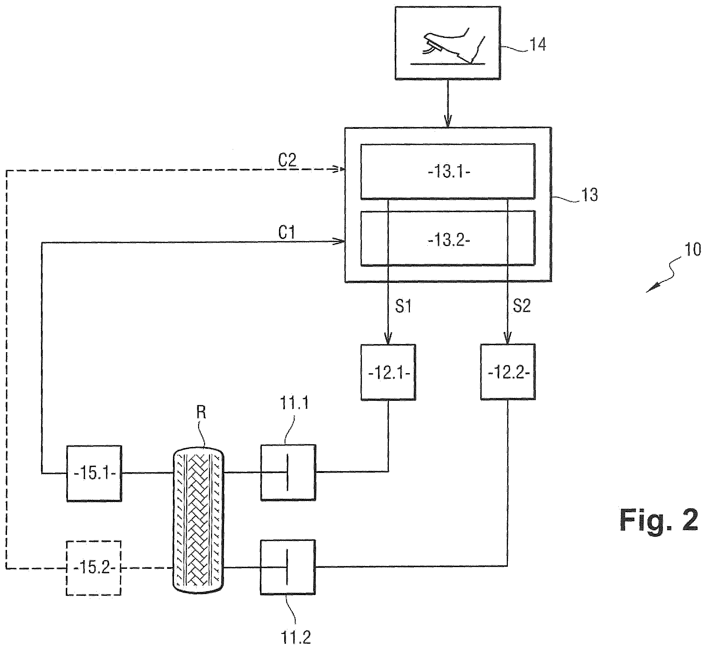

En référence à la figure 2, un dispositif 10 de freinage de la roue R, selon un premier mode de réalisation de l'invention, comprend un frein destiné à freiner l'aéronef A. Le frein comporte de manière connue en elle-même au moins un premier actionneur 11.1 et un deuxième actionneur 11.2 agencés pour presser une pile de disques de frein de façon à exercer un couple de freinage sur la roue R et ainsi ralentir la rotation de celle-ci. Le premier actionneur 11.1 et le deuxième actionneur 11.2 sont ici des vérins hydrauliques qui ont des capacités équivalentes. Le couple de freinage maximum est obtenu lorsque le premier actionneur 11.1 et le deuxième actionneur 11.2 exercent simultanément, sur les disques de freins, l'effort de presse maximum qu'ils sont capable de produire.

Le premier actionneur 11.1 est relié à une sortie d'une première servovalve 12.1 hydraulique et le deuxième actionneur 11.2 est relié à une sortie d'une deuxième servovalve 12.2 hydraulique. La première servovalve 12.1 et la deuxième servovalve 12.2 délivrent respectivement au premier actionneur 11.1 et au deuxième actionneur 11.2 un fluide sous pression provenant d'un groupe hydraulique et permettent de commander une position du premier actionneur 11.1 et du deuxième actionneur 11.2.

La première servovalve 12.1 et la deuxième servovalve 12.2 sont reliées à un système de commande 13. Le système de commande 13 comprend de façon connue en soi une unité électronique de commande 13.1 agencée pour délivrer un premier signal S1 de commande et un deuxième signal S2 de commande respectivement à la première servovalve 12.1 et à la deuxième servovalve 12.2. L'unité électronique de commande 13.1 est agencée pour élaborer le premier signal S1 et le deuxième signal S2 en fonction d'un enfoncement d'une pédale de frein 14 actionnée par le pilote de l'aéronef de telle manière que le premier signal S1 et le deuxième signal S2 sont représentatifs de l'enfoncement de la pédale de frein 14. Pour ce faire, l'unité électronique de commande 13.1 comprend en mémoire une ou plusieurs lois de commande mettant en relation les signaux S1, S2 et l'enfoncement de la pédale de frein.

Le système de commande 13 est relié à un premier capteur 15.1 de couple de freinage et comprend une unité électronique de surveillance 13.2 agencée pour comparer en permanence une première mesure C1 fournie par le premier capteur 15.1 à une valeur limite de couple de freinage prédéterminée. Lorsque l'unité électronique de surveillance 13.2 détecte que la première mesure C1 fournie par le premier capteur 15.1 excède la valeur limite de couple de freinage prédéterminée, l'unité électronique de surveillance 13.2 est agencée pour bloquer la délivrance du premier signal S1 de commande à la première servovalve 12.1 ou du deuxième signal S2 de commande à la deuxième servovalve 12.2.

Ainsi, l'unité électronique de surveillance 13.2 permet d'interrompre toute commande intempestive du premier actionneur 11.1 ou du deuxième actionneur 11.2, et donc de se protéger de tout sur-couple notamment dû à une défaillance de l'unité électronique de commande 13.1.

Optionnellement, le système de commande 13 peut être relié à un deuxième capteur 15.2 de couple de freinage qui, de manière similaire au premier capteur 15.1, est disposé sur le frein pour fournir au système de commande 13 une deuxième mesure C2 du couple de freinage appliqué par le frein sur la roue R. L'ajout du deuxième capteur 15.2 permet de garantir une meilleure disponibilité de la mesure du couple de freinage à l'unité électronique de surveillance 13.2, notamment en cas de dysfonctionnement du premier capteur 15.1. L'ajout du deuxième capteur 15.2 permet également de garantir une meilleure fiabilité du système en permettant la détection d'une dérive d'un des capteurs.

Avantageusement, le premier capteur 15.1 et le deuxième capteur 15.2 sont dissimilaires, c'est-à-dire de technologies différentes afin de n'être pas sensibles aux mêmes perturbations ou sujets aux mêmes types de pannes. Il sera avantageux d'agencer l'unité électronique de surveillance 13.2 pour surveiller les capteurs 15.1, 15.2 et, éventuellement, déterminer lequel du premier capteur 15.1 et du deuxième capteur 15.2 fournit une mesure erronée du couple de freinage. Le procédé comprendra par exemple la comparaison de la première mesure C1 fournie par le premier capteur 15.1 avec la deuxième mesure C2 fournie par le deuxième capteur 15.2, et l'analyse de l'évolution de la première mesure C1 et de la deuxième mesure C2 en fonction de l'enfoncement de la pédale de frein 14.

Par ailleurs, l'unité électronique de commande 13.1 est avantageusement agencée pour mettre en œuvre une boucle d'asservissement pour délivrer le premier signal S1 de commande et le deuxième signal S2 de commande selon une loi de commande fonction de l'enfoncement de la pédale de frein 14 et de la première mesure C1 de couple de freinage fournie par le premier capteur 15.1 et/ou de la deuxième mesure C2 de couple de freinage fournie par le deuxième capteur 15.2.

Ainsi, le système de commande est agencé pour convertir la valeur d'enfoncement de la pédale de frein en une consigne de couple de freinage qui est exploitée par l'unité électronique de commande 13.1 pour créer un signal S1 et un signal S2. La mesure du couple de freinage permet à la fois de modifier la consigne de couple de freinage pour fournir le couple de freinage correspondant à la valeur d'enfoncement de la pédale de frein mais aussi pour commander la limitation du couple en cessant d'alimenter l'un des deux actionneurs si la mesure du couple de freinage est supérieure au seuil prédéterminé.

La boucle d'asservissement permet de contrôler le couple de freinage appliqué par le frein sur la roue et d'obtenir, par exemple, une meilleure répartition de l'énergie dissipée lors d'un freinage entre différentes roues R pourvues de frein du dispositif 10 de freinage.

On notera que le système de commande 13 peut avoir la forme d'une unité informatique de traitement comportant classiquement au moins un processeur et une mémoire comprenant un programme de commande et un programme de surveillance qui sont exécutés par le processeur pour exécuter les fonctions ci-dessus énoncées. Alternativement, le système de commande 13 peut comporter deux circuits électroniques indépendant avec chacun ses moyens de calcul et sa mémoire, à savoir un circuit électronique agencé pour former l'unité de commande et un circuit électronique agencé pour former l'unité de surveillance.

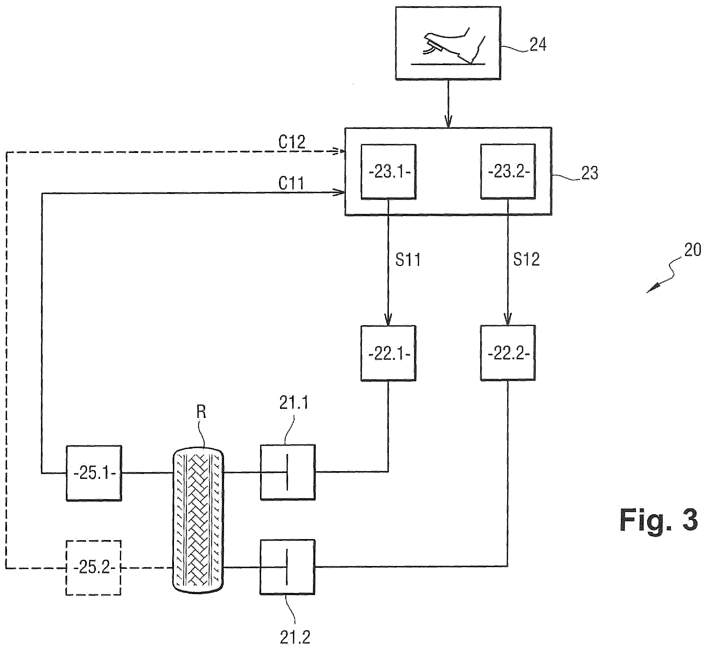

La figure 3 illustre un dispositif 20 de freinage selon un deuxième mode de réalisation de l'invention.

Comme précédemment, le dispositif 20 de freinage comprend un frein comportant un premier actionneur 21.1 et un deuxième actionneur 21.2 agencés pour appliquer un couple de freinage à la roue R. Le premier actionneur 21.1 est relié à une sortie d'une première servovalve 22.1 hydraulique et le deuxième actionneur 21.2 est relié à une sortie d'une deuxième servovalve 22.2 hydraulique. La première servovalve 22.1 et la deuxième servovalve 22.2 sont reliées à un système de commande 23 agencé pour délivrer à ladite première servovalve 22.1 un premier signal de commande S11 et à ladite deuxième servovalve 22.2 un deuxième signal de commande S12. Les signaux S11, S12 sont représentatifs d'un enfoncement d'une pédale de frein 24. Le système de commande 23 est également relié à un premier capteur de couple de freinage 25.1 disposé sur le frein pour fournir audit système de commande 23 une première mesure C11 du couple de freinage appliqué par le frein sur la roue R.

Le dispositif 20 de freinage diffère du dispositif 10 de freinage en ce que le système de commande 23 comprend une première unité électronique de commande 23.1 agencée pour délivrer le premier signal S11 de commande, et une deuxième unité électronique de commande 23.2 agencée pour délivrer le deuxième signal S12 de commande.

Dans le cas où la première mesure C11 du couple de freinage fournie par le premier capteur 25.1 excède la valeur limite de couple de freinage prédéterminée, la première unité électronique de commande 23.1 et la deuxième unité électronique de commande 23.2 peuvent respectivement interrompre la délivrance du premier signal S11 de commande et du deuxième signal S12 de commande.

Ainsi, le système de commande 23 permet d'interrompre la commande du premier actionneur 11.1 ou du deuxième actionneur 11.2, et donc de se protéger de tout sur-couple notamment dû à une défaillance de la première unité électronique de commande 23.1 ou de la deuxième unité électronique de commande 23.2. Chaque unité électronique de commande 23.1, 23.2 peut très rapidement relâcher l'effort produit par l'actionneur 11.1, 11.2 qu'elle commande en cas de surcouple résultant par exemple d'une défaillance de l'autre unité de commande 23.2, 23.1, ce qui limite le surcouple exercé par le système de freinage dans son ensemble.

De manière similaire au dispositif 10 de freinage, le dispositif 20 peut optionnellement comprendre un deuxième capteur 25.2 de couple de freinage disposé sur le frein pour fournir au système de commande 23 une deuxième mesure C12 du couple de freinage appliqué par le frein sur la roue R.

De même, la première unité électronique de commande 23.1 et la deuxième unité électronique de commande 23.2 peuvent comprendre optionnellement une boucle d'asservissement pour délivrer le premier signal S11 de commande et le deuxième signal S12 commande en fonction de l'enfoncement de la pédale de frein 24 et de la mesure de couple de freinage. La mise en œuvre et les avantages de l'asservissement en couple sont les mêmes que dans le premier mode de réalisation.

Bien entendu, l'invention n'est pas limitée aux modes de réalisation décrits mais englobe toute variante entrant dans le champ de l'invention telle que définie par les revendications.

Bien qu'ici les premiers actionneurs 11.1, 21.1 et les deuxièmes actionneurs 11.2, 21.2 sont hydrauliques, ils peuvent être électromécaniques. On prévoira alors de préférence une unité de commande reliée à deux unités de puissance reliées chacune à l'un des actionneurs.

Les premiers actionneurs 11.1, 21.1 et les deuxièmes actionneurs 11.2, 21.2 peuvent être de type différent.

Les premiers actionneurs 11.1, 21.1 et les deuxièmes actionneurs 11.2, 21.2 ne sont pas nécessairement de capacité équivalente.

Le nombre d'actionneurs peut être supérieur à deux.

Le nombre de capteurs de couple de freinage peut être supérieur à deux.

Les deux modes de réalisations décrits ici indépendamment l'un de l'autre peuvent être combinés.

Bien qu'ici le dispositif de freinage soit décrit en relation avec une roue d'aéronef, il peut aussi porter sur une roue freinée d'une voiture et plus généralement sur une roue freinée d'un véhicule.

La consigne de freinage peut être issue de l'enfoncement d'une pédale de frein ou bien de l'actionnement de tout autre organe de commande, ou bien encore d'un calculateur. Ainsi, la consigne de freinage peut résulter du choix, par le pilote, d'un mode de freinage « autobrake » garantissant une décélération fixe de l'aéronef.

## Revendications

1. Dispositif (10, 20) de freinage d'une roue (R) comprenant :
- un frein comportant au moins un premier actionneur (11.1, 21.1) et un deuxième actionneur (11.2, 21.2) agencés pour appliquer un couple de freinage à la roue ;
- un système de commande (13, 23) agencé pour commander individuellement le premier actionneur et le deuxième actionneur en fonction d'une valeur de freinage requise ;
- au moins un premier capteur (15.1) de couple agencé pour fournir à l'unité de commande une première mesure (C1, C11) représentative du couple de freinage appliqué par le frein sur la roue ;
**caractérisé en ce que** le système de commande est agencé pour interrompre la commande du premier actionneur ou la commande du deuxième actionneur lorsque la première mesure (C1, C11) excède une valeur limite de couple de freinage prédéterminée.

2. Dispositif (10) de freinage selon la revendication 1, dans lequel le système de commande (13) comprend une unité électronique de commande (13.1) agencée pour délivrer un premier signal (S1) de commande au premier actionneur (11.1) et un deuxième signal (S2) de commande au deuxième actionneur (11.2), et une unité électronique de surveillance (13.2) agencée pour empêcher la délivrance du premier signal de commande ou du deuxième signal de commande lorsque la première mesure (C1, C11) excède la valeur limite de couple de freinage prédéterminée.

3. Dispositif (10, 20) de freinage selon la revendication 1, dans lequel le système de commande (23) comprend une première unité électronique de commande (23.1) individuelle agencée pour délivrer un premier signal (S11) de commande au premier actionneur (21.1) et une deuxième unité électronique de commande (23.2) individuelle agencée pour délivrer un deuxième signal (S12) de commande au deuxième actionneur (21.2).

4. Dispositif (10, 20) de freinage selon l'une quelconque des revendications précédentes, dans lequel le système de commande (13, 23) comprend une boucle d'asservissement pour commander le premier actionneur (11.1, 21.1) et le deuxième actionneur (11.2, 21.2) selon une loi de commande fonction de la valeur de freinage requise et de la première mesure (C1, C11).

5. Dispositif (10, 20) de freinage selon l'une quelconque des revendications précédentes, dans lequel la valeur de freinage est représentative d'une amplitude de mouvement d'un instrument de commande de freinage (14, 24).

6. Dispositif (10, 20) de freinage selon l'une quelconque des revendications précédentes, dans lequel le premier actionneur (11.1, 21.1) et le deuxième actionneur (11.2, 21.2) sont électromécaniques.

7. Dispositif (10, 20) de freinage selon l'une quelconque des revendications 1 à 5, dans lequel le premier actionneur (11.1, 21.1) et le deuxième actionneur (11.2, 21.2) sont des vérins hydrauliques.

8. Dispositif (10, 20) de freinage selon l'une quelconque des revendications précédentes, comprenant un deuxième (15.2, 25.2) capteur de couple agencé pour fournir au système de commande une deuxième mesure (C2, C12) du couple de freinage appliqué par le frein sur la roue.

9. Dispositif (10, 20) de freinage selon la revendication 8, dans lequel le premier capteur (15.1, 25.1) et le deuxième capteur (15.2, 25.2) sont de technologies différentes.

10. Train d'atterrissage (L) comprenant au moins une roue (R) pourvue d'un dispositif de freinage (10, 20) conforme à l'une quelconques des revendications précédentes.

11. Aéronef (A) comprenant un train d'atterrissage (L) selon la revendication 10.

## Patentansprüche

1. Vorrichtung (10, 20) zum Bremsen eines Rades (R), umfassend:
- eine Bremse, die zumindest einen ersten Aktor (11.1, 21.1) und einen zweiten Aktor (11.2, 21.2) aufweist, welche derart angeordnet sind, dass sie ein Bremsmoment auf das Rad anwenden;
- ein Steuerungssystem (13, 23), das derart angeordnet ist, dass es den ersten Aktor und den zweiten Aktor in Abhängigkeit von einem erforderlichen Bremswert individuell steuert;
- mindestens einen ersten Momentsensor (15.1), der derart angeordnet ist, dass er der Steuereinheit einen ersten Messwert (C1, C11) liefert, welcher das Bremsmoment wiedergibt, wie es von der Bremse auf das Rad angewendet wird;
**dadurch gekennzeichnet, dass** das Steuerungssystem derart angeordnet ist, dass es die Steuerung des ersten Aktors oder die Steuerung des zweiten Aktors unterbricht, wenn der erste Messwert (C1, C11) einen vorbestimmten Grenzwert des Bremsmoments überschreitet.

2. Bremsvorrichtung (10) nach Anspruch 1, wobei das Steuerungssystem (13) eine elektronische Steuereinheit (13.1), die derart angeordnet ist, dass sie dem ersten Aktor (11.1) ein erstes Steuersignal (S1) liefert und dem zweiten Aktor (11.2) ein zweites Steuersignal (S2) liefert, und eine elektronische Überwachungseinheit (13.2) umfasst, die derart angeordnet ist, dass sie die Lieferung des ersten Steuersignals oder des zweiten Steuersignals verhindert, wenn der erste Messwert (C1, C11) den vorbestimmten Grenzwert des Bremsmoments überschreitet.

3. Bremsvorrichtung (10, 20) nach Anspruch 1, wobei das Steuerungssystem (23) eine erste individuelle elektronische Steuereinheit (23.1), die derart angeordnet ist, dass sie dem ersten Aktor (21.1) ein erstes Steuersignal (S11) liefert, und eine zweite individuelle elektronische Steuereinheit (23.2) umfasst, die derart angeordnet ist, dass sie dem zweiten Aktor (21.2) ein zweites Steuersignal (S12) liefert.

4. Bremsvorrichtung (10, 20) nach einem beliebigen der vorhergehenden Ansprüche, wobei das Steuerungssystem (13, 23) einen Regelkreis umfasst, um den ersten Aktor (11.1, 21.1) und den zweiten Aktor (11.2, 21.2) gemäß einem Steuerungsgesetz zu steuern, das vom erforderlichen Bremswert und vom ersten Messwert (C1, C11) abhängt.

5. Bremsvorrichtung (10, 20) nach einem beliebigen der vorhergehenden Ansprüche, wobei der Bremswert eine Auslenkung eines Bremssteuerungsgeräts (14, 24) wiedergibt.

6. Bremsvorrichtung (10, 20) nach einem beliebigen der vorhergehenden Ansprüche, wobei der erste Aktor (11.1, 21.1) und der zweite Aktor (11.2, 21.2) elektromechanisch sind.

7. Bremsvorrichtung (10, 20) nach einem beliebigen der Ansprüche 1 bis 5, wobei es sich bei dem ersten Aktor (11.1, 21.1) und dem zweiten Aktor (11.2, 21.2) um hydraulische Stellzylinder handelt.

8. Bremsvorrichtung (10, 20) nach einem beliebigen der vorhergehenden Ansprüche, wobei sie einen zweiten Momentsensor (15.2, 25.2) umfasst, der derart angeordnet ist, dass er dem Steuerungssystem einen zweiten Messwert (C2, C12) des Bremsmoments liefert, wie es von der Bremse auf das Rad angewendet wird.

9. Bremsvorrichtung (10, 20) nach Anspruch 8, wobei der erste Sensor (15.1, 25.1) und der zweite Sensor (15.2, 25.2) unterschiedliche Technologien zum Einsatz bringen.

10. Flugzeugfahrwerk (L), das mindestens ein Rad (R) umfasst, welches mit einer Bremsvorrichtung (10, 20) gemäß einem beliebigen der vorhergehenden Ansprüche versehen ist.

11. Luftfahrzeug (A), das ein Flugzeugfahrwerk (L) nach Anspruch 10 umfasst.

## Claims

1. A braking device (10, 20) for a wheel (R), comprising:
· a brake comprising at least a first actuator (11.1, 21.1) and a second actuator (11.2, 21.2) arranged to apply a braking torque to the wheel;
· a control system (13, 23) arranged to control the first actuator and the second actuator individually as a function of a required braking value;
· at least one first torque sensor (15.1) arranged to supply the control unit with a first measurement (C1, C11) representative of the braking torque applied by the brake to the wheel;
**characterised in that** the control system is arranged to interrupt control of the first actuator or control of the second actuator when the first measurement (C1, C11) exceeds a predetermined braking torque limit value.

2. A braking device (10) according to claim 1, wherein the control system (13) comprises an electronic control unit (13.1) arranged to deliver a first control signal (S1) to the first actuator (11.1) and a second control signal (S2) to the second actuator (11.2), and an electronic monitoring unit (13.2) arranged to prevent the first control signal or the second control signal from being delivered when the first measurement (C1, C11) exceeds the predetermined braking torque limit value.

3. A braking device (10, 20) according to claim 1, wherein the control system (23) comprises a first individual electronic control unit (23.1) arranged to deliver a first control signal (S11) to the first actuator (21.1) and a second individual electronic control unit (23.2) arranged to deliver a second control signal (S12) to the second actuator (21.2).

4. A braking device (10, 20) according to any one of the preceding claims, wherein the control system (13, 23) comprises a feedback control loop for controlling the first actuator (11.1, 21.1) and the second actuator (11.2, 21.2) according to a control law dependent on the required braking value and on the first measurement (C1, C11).

5. A braking device (10, 20) according to any one of the preceding claims, wherein the braking value is representative of the amplitude of movement of a braking control instrument (14, 24).

6. A braking device (10, 20) according to any one of the preceding claims, wherein the first actuator (11.1, 21.1) and the second actuator (11.2, 21.2) are electromechanical.

7. A braking device (10, 20) according to any one of claims 1 to 5, wherein the first actuator (11.1, 21.1) and the second actuator (11.2, 21.2) are hydraulic cylinders.

8. A braking device (10, 20) according to any one of the preceding claims, comprising a second torque sensor (15.2, 25.2) arranged to provide the control system with a second measurement (C2, C12) of the braking torque applied by the brake to the wheel.

9. A braking device (10, 20) according to claim 8, wherein the first sensor (15.1, 25.1) and the second sensor (15.2, 25.2) are of different technologies.

10. Landing gear (L) comprising at least one wheel (R) provided with a braking device (10, 20) according to any one of the preceding claims.

11. An aircraft (A) comprising a landing gear (L) according to claim 10.
